# EUROPEAN PATENT APPLICATION

(11) **EP 2 765 473 A1**
(43) Date of publication of application: **13.08.2014**
(21) Application number: 13795149.7
(22) Date of filing: 31.07.2013

(54) **INPUT PROCESSING METHOD AND APPARATUS**

(30) Priority: 31.12.2012 CN 201210590206
(71) Applicant: Huawei Technologies Co., Ltd., Shenzhen, Guangdong 518129 (CN)
(72) Inventor: RAO, Zhangwen, Shenzhen, Guangdong 518129 (CN)
(74) Representative: Pfenning, Meinig & Partner GbR
(86) International application number: PCT/CN2013/080480
(87) International publication number: WO 2014/101410

(57) **Abstract**

Embodiments of the present invention provide an input processing method and apparatus. The input processing method includes: acquiring, by a terminal device according to an input mode selected by a user, first input information that is input by the user and matches the input mode, where the input mode is a gesture input mode or a voice input mode; encoding the first input information according to a preset encoding rule to obtain code corresponding to the first input information; and querying a pre-established vocabulary to acquire a candidate word corresponding to the code. In the input processing method provided in the embodiments of the present invention, by acquiring first input information according to an input mode selected by a user, acquiring corresponding code according to the first input information, and then acquiring, by encoding, a word to be input by the user, rapid and accurate input of complex words is implemented, thereby effectively improving the input efficiency.

## Description

### TECHNICAL FIELD

The present invention relates to communications technologies, and in particular, to an input processing method and apparatus.

### BACKGROUND

Nowadays, intelligent devices such as smart phones and tablet computers become increasingly popular. Most of these devices adopt a touch screen, which requires performing input operations by using a virtual keyboard. Limited by the area of the screen, a user cannot perform an input operation using ten fingers at the same time. Therefore, the efficiency of input by using a virtual keyboard is far lower than the efficiency of input by using a physical keyboard. Especially in a particular scenario (for example, when driving or sitting in a vibrating bus), for a hybrid input of uppercase and lowercase letters, numerals and symbols, for example, when a user needs to input an email address (for example, Jacky12345@huawei.com), the user needs to frequently switch among numeral, letter and punctuation symbol input modes, in order complete the input. Not only the input efficiency is low, but also a wrong button may easily be pressed by mistake, making it difficult to ensure the input accuracy.

To solve the above problem, devices such as smart phones and tablet computers in the prior art mainly adopt voice input and/or handwriting input manners to improve the input efficiency of the user. However, voice input cannot be implemented without network support, and can only recognize the standard pronunciation of a specific language and has a low recognition rate for different accents; and for handwriting input, handwriting needs to conform to a certain specification, and secondary selection is required for characters having many strokes. Therefore, the above manners still have the low input efficiency problem.

### SUMMARY

Embodiments of the present invention provide an input processing method and apparatus, so as to implement rapid and accurate input of complex words, thereby effectively improving the input efficiency.

According to a first aspect, the present invention provides an input processing method, including:
acquiring, by a terminal device according to an input mode selected by a user, first input information that is input by the user and matches the input mode, where the input mode is a gesture input mode or a voice input mode;
encoding, by the terminal device, the first input information according to a preset encoding rule to obtain code corresponding to the first input information; and
querying, by the terminal device, a pre-established vocabulary to acquire a candidate word corresponding to the code.

In a first possible implementation manner of the first aspect, the acquiring first input information that is input by the user and matches the input mode includes:
when the input mode is the gesture input mode, acquiring information about a first touch track that is input on a virtual keyboard of the terminal device by the user; or when the input mode is the voice input mode, collecting first sound information by using a sound sensor of the terminal device.

The encoding the first input information according to a preset encoding rule to obtain a code corresponding to the first input information includes:
when the acquired first input information is the first touch track of the user on the virtual keyboard of the terminal device, combining characters corresponding to buttons which the first touch track sequentially passes through on the virtual keyboard, to obtain the code corresponding to the first input information; and
when the acquired first input information is the first sound information, encoding the first sound information by using a hash algorithm, a hidden Markov model HMM algorithm or a dynamic time warping DTW algorithm to obtain the code corresponding to the first input information.

With reference to the first aspect or the first possible implementation manner of the first aspect, in a second possible implementation manner of the first aspect, the method further includes:
receiving, by the terminal device, a word processing request, where the word processing request is used for requesting addition of a word to the vocabulary, the word processing request includes a word processing mode and a word to be added, and the word processing mode is a gesture word processing mode or a voice word processing mode;
receiving, by the terminal device according to the word processing request, second input information that is input by the user and matches the word processing mode; and encoding the second input information according to the preset encoding rule to generate code corresponding to the second input information; and
establishing, by the terminal device, a mapping relationship between the code corresponding to the second input information and the word to be added, and storing the mapping relationship into the vocabulary;

With reference to the second possible implementation manner of the first aspect, in a third possible implementation manner of the first aspect, the receiving second input information that is input by the user and matches the word processing mode includes:
when the word processing mode is the gesture word processing mode, acquiring information about a second touch track that is input on the virtual keyboard of the terminal device by the user; or
when the word processing mode is the voice word processing mode, collecting second sound information by using the sound sensor of the terminal device.

Correspondingly, when the acquired second input information is the second touch track of the user on the virtual keyboard of the terminal device, characters corresponding to buttons which the second touch track sequentially passes through on the virtual keyboard are combined to obtain the code corresponding to the second input information; and
when the acquired second input information is the second sound information, encoding processing is performed on the second sound information by using the hash algorithm, the hidden Markov model HMM algorithm or the dynamic time warping DTW algorithm to obtain the code corresponding to the second input information.

With reference to the first aspect, in the first to third possible implementation manners of the first aspect, after the querying a pre-established vocabulary to acquire a candidate word corresponding to the code, the method further includes:
when a plurality of candidate words corresponding to the code is acquired, arranging the plurality of candidate words according to a descending order of frequency, and displaying, on a screen of the terminal device, the sorted plurality of candidate words for selection by the user; and
displaying, in a particular area on the screen of the terminal device, a word selected by the user from the sorted plurality of candidate words.

According to a second aspect, the present invention provides an input processing apparatus, including:
an information acquiring module, configured to acquire, according to an input mode selected by a user, first input information that is input by the user and matches the input mode, where the input mode is a gesture input mode or a voice input mode;
an encoding processing module, configured to encodes the first input information according to a preset encoding rule to obtain code corresponding to the first input information; and
a query and acquisition module, configured to query a pre-established vocabulary to acquire a candidate word corresponding to the code.

In a first possible implementation manner of the second aspect, the information acquiring module is specifically configured to: when the input mode is the gesture input mode, acquire information about a first touch track of the user on a virtual keyboard of the input processing apparatus; or
the information acquiring module is specifically configured to: when the input mode is the voice input mode, collect first sound information by using a sound sensor of the input processing apparatus; and
the encoding processing module is specifically configured to: when the first input information acquired by the information acquiring module is the first touch track of the user on the virtual keyboard of the input processing apparatus, combine characters corresponding to buttons which the first touch track sequentially passes through on the virtual keyboard, to obtain the code corresponding to the first input information; or
the encoding processing module is specifically configured to: when the first input information acquired by the information acquiring module is the first sound information, encodes the first sound information by using a hash algorithm, a hidden Markov model HMM algorithm or a dynamic time warping DTW algorithm to obtain the code corresponding to the first input information.

With reference to the second aspect or the first possible implementation manner of the second aspect, in a second possible implementation manner of the second aspect, the input processing apparatus further includes: a receiving module and a word storage module, where
the receiving module is configured to receive a word processing request, where the word processing request is used for requesting addition of a word to the vocabulary, the word processing request includes a word processing mode and a word to be added, and the word processing mode is a gesture word processing mode or a voice word processing mode;
the information acquiring module is further configured to receive, according to the word processing request, second input information that is input by the user and matches the word processing mode;
the encoding processing module is further configured to encodes the second input information according to the preset encoding rule to generate code corresponding to the second input information; and
the word storage module is configured to establish a mapping relationship between the code corresponding to the second input information and the word to be added, and store the mapping relationship into the vocabulary.

With reference to the second possible implementation manner of the second aspect, in a third possible implementation manner of the second aspect, the information acquiring module is specifically configured to: when the word processing mode is the gesture word processing mode, acquire information about a second touch track of the user on the virtual keyboard of the input processing apparatus; or
the information acquiring module is specifically configured to: when the word processing mode is the voice word processing mode, collect second sound information by using the sound sensor of the input processing apparatus according to the voice word processing mode.

With reference to the third possible implementation manner of the second aspect, in a fourth possible implementation manner of the second aspect, the encoding processing module is specifically configured to: when the second input information acquired by the information acquiring module is the second touch track of the user on the virtual keyboard of the input processing apparatus, combine characters corresponding to buttons which the second touch track sequentially passes through on the virtual keyboard to obtain the code corresponding to the second input information; or
the encoding processing module is specifically configured to: when the second input information acquired by the information acquiring module is the second sound information, encodes the second sound information by using the hash algorithm, the hidden Markov model HMM algorithm or the dynamic time warping DTW algorithm to obtain the code corresponding to the second input information.

With reference to the second aspect, in the first to fourth possible implementation manners of the second aspect, in a fifth possible implementation manner of the second aspect, the input processing apparatus further includes:
a sorting processing module, configured to: when a plurality of candidate words corresponding to the code is acquired, sort the plurality of candidate words according to a descending order of frequency, and display, on a screen of the input processing apparatus, the sorted plurality of candidate words for selection by the user; and
a display module, the display module being configured to display, in a particular area on the screen of the input processing apparatus, a word selected by the user from the sorted plurality of candidate words.

In the embodiments of the present invention, according to an input mode selected by a user, first input information that is input by the user and matches the input mode is acquired; encoding processing is performed on the first input information according to a preset encoding rule to obtain code corresponding to the first input information; and finally a pre-established vocabulary is queried to acquire a candidate word corresponding to the code. By acquiring the first input information according to different input modes, acquiring corresponding code according to the first input information, and then acquiring, by encoding, a word to be input by the user, rapid and accurate input of complex words is implemented, thereby effectively improving the input efficiency and improving the user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of an embodiment of an input processing method of the present invention;
FIG. 2 is a flowchart of another embodiment of an input processing method of the present invention;
FIG. 3 is a flowchart of still another embodiment of an input processing method of the present invention;
FIG. 4 is a schematic diagram of an input interface of a terminal device;
FIG. 5 is another schematic diagram of an input interface of a terminal device;
FIG. 6 is a flowchart of yet another embodiment of an input processing method of the present invention;
FIG. 7 is still another schematic diagram of an input interface of a terminal device;
FIG. 8 is a schematic structural diagram of an embodiment of an input processing apparatus of the present invention;
FIG. 9 is a schematic structural diagram of another embodiment of an input processing apparatus of the present invention; and
FIG. 10 is a schematic structural diagram of still another embodiment of an input processing apparatus of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

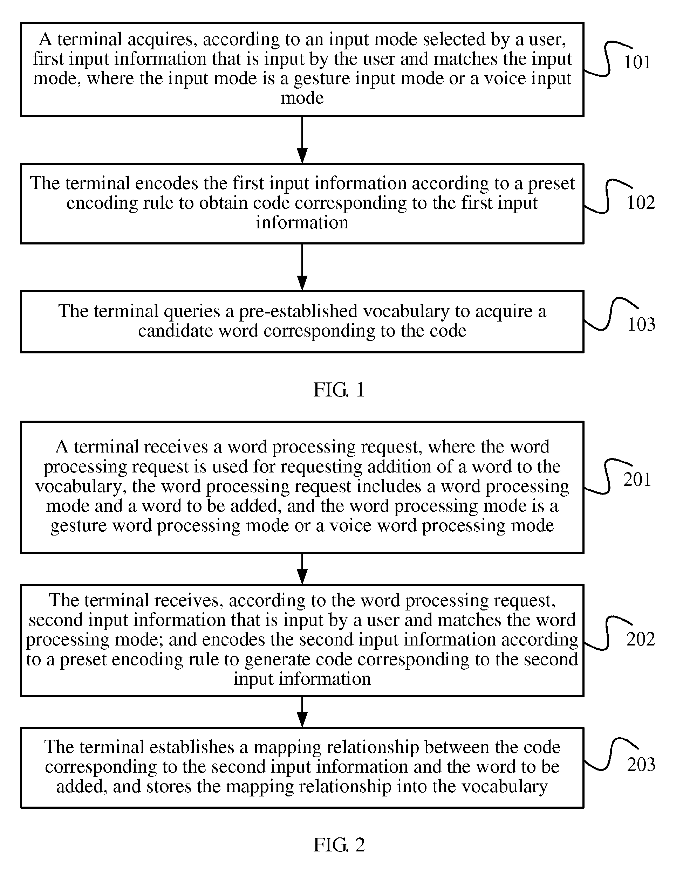

FIG. 1 is a flowchart of an embodiment of an input processing method of the present invention. As shown in FIG. 1, the input processing method provided in this embodiment is performed by a terminal device, and the input processing method specifically includes the following steps:

Step 101: The terminal device acquires, according to an input mode selected by a user, first input information that is input by the user and matches the input mode, where the input mode is a gesture input mode or a voice input mode.

In this embodiment, the terminal device may be a mobile phone, a tablet computer or the like. Specifically, the user selects an input mode by triggering a corresponding button on an input interface of the terminal device. Preferably, the input mode is a voice input mode or a gesture input mode. Then, first input information that is input by the user and matches the input mode is acquired. Different input modes correspond to different input information, so the first input information varies with different input modes. For example, in the voice input mode, the first input information is a piece of sound information, and in the gesture input mode, the first input information is a piece of touch track information, where the touch track information may be, for example, text or graphic information.

Step 102: The terminal device encodes the first input information according to a preset encoding rule to obtain code corresponding to the first input information.

In this embodiment, after the first input information that is input by the user and matches the input mode is acquired, encoding processing is performed on the first input information according to a preset encoding rule to obtain code corresponding to the first input information. For different input modes, different encoding rules are set correspondingly, and corresponding code is generated. Specifically, there is an encoding rule preset for the gesture input mode, and there is also an encoding rule preset for the voice input mode.

Step 103: The terminal device queries a pre-established vocabulary to acquire a candidate word corresponding to the code.

In this embodiment, after the code corresponding to the first input information is obtained, a pre-established vocabulary is queried to acquire a candidate word corresponding to the code. Specifically, the pre-established vocabulary may be a vocabulary on a server connected to the terminal device, or a local vocabulary established by the terminal device itself, or a local vocabulary downloaded by the terminal device from a vocabulary on a server and stored to a memory of the terminal device. The vocabulary may include hot words, special words, user-defined words and the like, and a mapping relationship between code and the words is established, so that a corresponding candidate word can be rapidly indexed from the local vocabulary according to code. In addition, the candidate word may specifically be in the form of one or a combination of several of the following: a single word, a phrase, a sentence, and a long string of characters such as numerals and letters, for example, a QQ account 1234657, or an email address yagneos235@hotmail.com.cn.

Preferably, when one candidate word corresponding to the code is acquired, the one candidate word is a word to be input by the user. When a plurality of candidate words corresponding to the code is acquired, the plurality of candidate words may be sorted according to a descending order of frequency. Then, the sorted plurality of candidate words is displayed on a screen of the terminal device for selection by the user, and a word selected by the user from the sorted plurality of candidate words is displayed in a particular area on the screen of the terminal device.

In this embodiment, according to an input mode selected by a user, first input information that is input by the user and matches the input mode is acquired; encoding processing is performed on the first input information according to a preset encoding rule to obtain code corresponding to the first input information; and finally a pre-established vocabulary is queried to acquire a candidate word corresponding to the code. By acquiring the first input information according to different input modes, acquiring corresponding code according to the first input information, and then acquiring, by encoding, a word to be input by the user, rapid and accurate input of complex words is implemented, thereby effectively improving the input efficiency and improving the user experience.

Further, in another embodiment of the present invention, based on the above embodiment shown in FIG. 1, the acquiring first input information that is input by the user and matches the input mode in step 101 may specifically be implemented in the following manners:
manner 1: when the input mode is the gesture input mode, acquire a first touch track that is input on a virtual keyboard of the terminal device by the user; and
manner 2: when the input mode is the voice input mode, collect first sound information by using a sound sensor of the terminal device.

In this embodiment, a vocabulary needs to be pre-established on a server, where the vocabulary includes hot words, special words, user-defined words and the like. Here, the user-defined word is a word predefined by the user and backed up in the vocabulary by using the terminal device, and the user-defined word needs to be associated with a personal account of the user, for example, the vocabulary stores a user identifier and a user-defined word corresponding to the user identifier. The server indexes and sorts collected words, for example, indexes based on Chinese pinyin, phonetic alphabets, strokes, the frequency of occurrence and the like. To enable the vocabulary to provide more abundant words, dedicated maintenance personnel may be required to collect commonly used phrases and frequently occurring words from the Internet in time, and add them into the vocabulary in time. In addition, for convenience of use by the user, the user may download, by using the terminal device, the vocabulary into the local vocabulary of the terminal device such as a mobile phone or a tablet computer. It should be noted that, the user-defined word in the local vocabulary corresponds to the identifier of the user. Meanwhile, to meet requirements of different users, the local vocabulary may further have a powerful customization function. The user may add some of his or her commonly used words into an independent file in the local vocabulary, and upload the file to the server, and the server writes the words in the file to the user-defined word for backup processing.

It should be further noted that, the server may also retrieve user-defined words corresponding to a plurality of user identifiers, and establish indexes according to a descending order of frequency, so as to generate and add hot words into the vocabulary.

During use by the user, the terminal device may preferentially download words associated with the account of the user, that is, user-defined words, into the local vocabulary. For professional words, hot words and the like, the server informs the user that an update is available, and the user selects the update and downloads the professional words and hot words into the local vocabulary.

In this embodiment, the local vocabulary has a powerful customization function, and the user may add his or her commonly used words into the library by using the customization function, so as to facilitate subsequent use by the user. In the following, how the user defines a word is described in detail.

In another embodiment of the present invention, as shown in FIG. 2, which is a flowchart of another embodiment of an input processing method of the present invention, based on the above embodiment shown in FIG. 1, before step 101, the method of this embodiment may further include the following steps:

Step 201: A terminal device receives a word processing request, where the word processing request is used for requesting addition of a word to the vocabulary, the word processing request includes a word processing mode and a word to be added, and the word processing mode is a gesture word processing mode or a voice word processing mode.

In this embodiment, the word processing mode is a gesture word processing mode or a voice word processing mode, and the word processing request is used for requesting addition of a word to the vocabulary. A user may select a word processing mode by triggering a corresponding button on the input interface, and input, in the word processing mode, a word to be added. The word to be added is a word that does not exist in the local vocabulary, and is a word defined by the user. The word to be added may be a commonly used QQ account, email address, password, phone number or the like of the user. The commonly used word of the user is added into the vocabulary by using the word processing request.

Step 202: The terminal device receives, according to the word processing request, second input information that is input by the user and matches the word processing mode; and encodes the second input information according to a preset encoding rule to generate code corresponding to the second input information.

In this embodiment, the second input information that is input by the user and matches the word processing mode is received according to the word processing request, and the second input information varies with different word processing modes. In the gesture word processing mode, the second input information is a touch track of the user on the virtual keyboard of the terminal device, and in the voice input mode, the second input information is sound information collected by using the sound sensor of the terminal device. In addition, encoding processing is performed on the received second input information according to the preset encoding rule to generate code corresponding to the second input information, where the code uniquely identifies the second input information. For different input modes, different encoding manners are adopted. An encoding rule preset for the gesture word processing mode is combining characters corresponding to buttons which the first touch track of the user on the virtual keyboard of the terminal device sequentially passes through; and an encoding rule preset for the voice word processing mode is a hash (Hash) algorithm, a hidden Markov model (Hidden Markov models, HMM for short) algorithm or a dynamic time warping (Dynamic Time Warping, DTW for short) algorithm.

Step 203: The terminal device establishes a mapping relationship between the code corresponding to the second input information and the word to be added, and stores the mapping relationship into the vocabulary.

In this embodiment, a mapping relationship between the code corresponding to the second input information and the word to be added is established according to the code corresponding to the second input information and the word, and the mapping relationship is stored into the vocabulary. In this way, the input information of the user is mapped to the word.

In this embodiment, a word added by a user is stored into a vocabulary, and a mapping relationship between input information of the user and the word is established, so that when the user inputs new input information, the input information of the user can be recognized, code corresponding to the input information can be acquired, and a candidate word needed by the user can be indexed rapidly according to the mapping relationship between the code and the word that is stored in the local vocabulary.

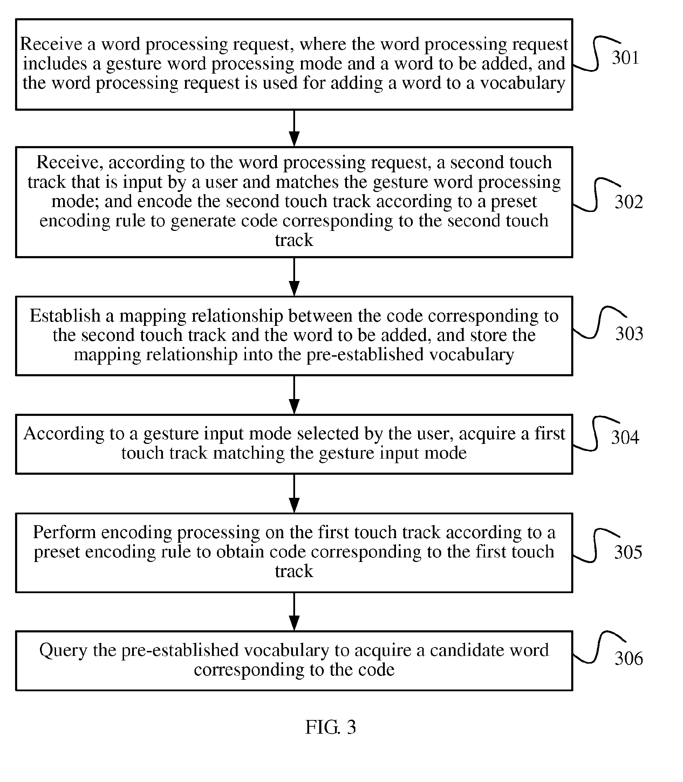

FIG. 3 is a flowchart of still another embodiment of an input processing method of the present invention. In this embodiment, the technical solution of this embodiment is introduced in detail by using an example where the method is performed by a terminal device such as a mobile phone, an input mode is a gesture input processing mode, and first input information is information about a touch track input by a user. As shown in FIG. 3, the method includes:

Step 301: Receive a word processing request, where the word processing request includes a gesture word processing mode and a word to be added, and the word processing request is used for adding a word to a vocabulary.

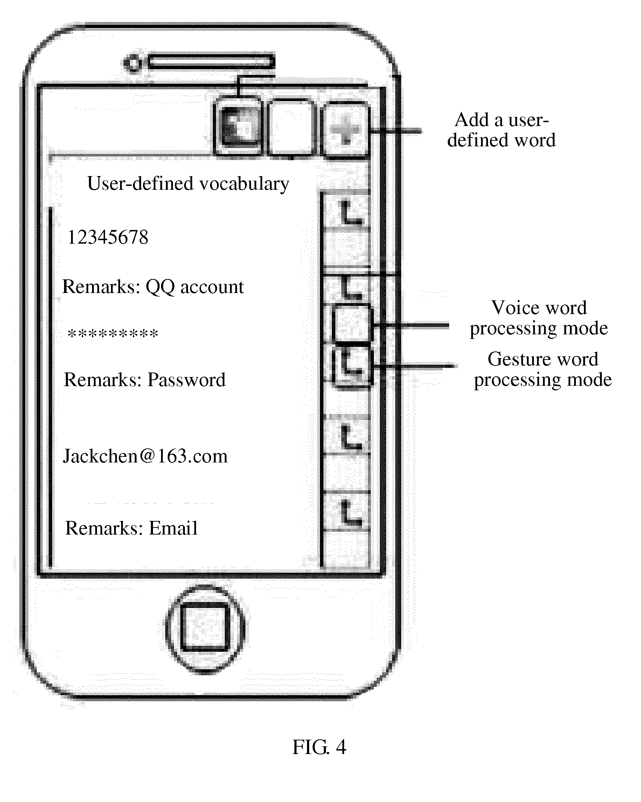

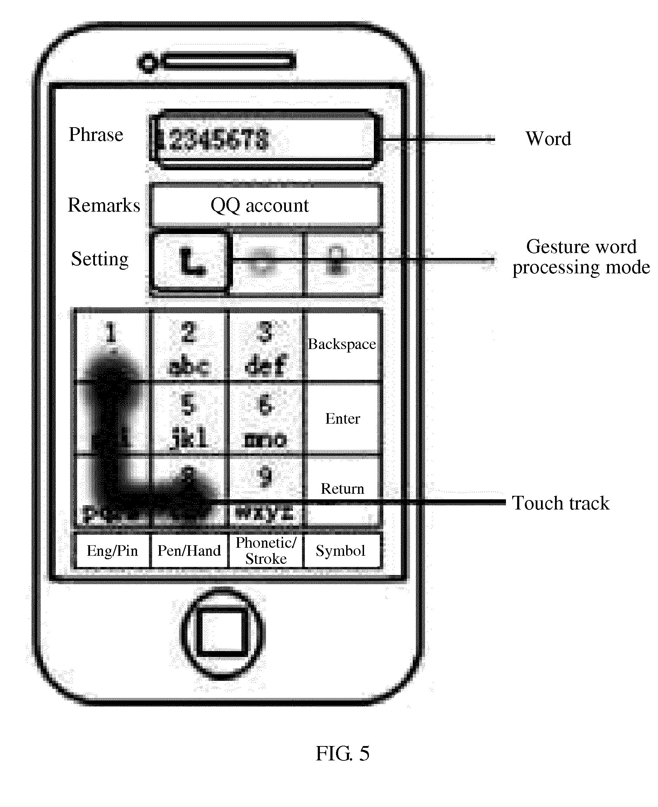

In this embodiment, the word processing request is input by the user by using an input interface of the terminal device. FIG. 4 is a schematic diagram of an input interface of a terminal device. FIG. 5 is another schematic diagram of an input interface of a terminal device. First, the user opens a page for adding a user-defined word on the input interface, and there are corresponding buttons on the page, which respectively represent different word processing modes. As shown in FIG. 4, there are the gesture word processing mode and a voice word processing mode. When the user selects the gesture word processing mode, the page shown in FIG. 5 appears, and in the gesture word processing mode, the user inputs a word 12345678 to be added, and sets remark information for the word, with remarks being a QQ account.

Step 302: Receive, according to the word processing request, a second touch track that is input by the user and matches the gesture word processing mode; and encodes the second touch track according to a preset encoding rule to generate code corresponding to the second touch track.

In this embodiment, in the gesture word processing mode, the user flicks on a virtual keyboard of the terminal device to generate the second touch track, and when the second touch track of the user on the virtual keyboard of the terminal device is acquired, encoding processing is performed on the second touch track according to the preset encoding rule to generate the code corresponding to the second touch track. The encoding rule is preset, and in this embodiment, characters corresponding to buttons which the second touch track sequentially passes through on the virtual keyboard are combined into code to obtain the code corresponding to the second touch track. The characters are numerals or letters, so the numerals corresponding to the buttons which the second touch track sequentially passes through may be used as the code, or the letters corresponding to the buttons which the second touch track sequentially passes through may be used as the code.

As shown in FIG. 5, the second touch track information is an L-shaped graphic drawn by the user, and the graphic is drawn by the user with a single stroke. The touch track of the L-shaped graphic sequentially passes through numeral buttons 1478 on the keyboard, with the starting point of the track being 1 and the end point of the track being 8, where the end point of the touch track indicates the end of the second touch track. In this embodiment, the encoding rule is combining the characters corresponding to the buttons which the second touch track sequentially passes through on the virtual keyboard. Referring to FIG. 5, the virtual keyboard on the input interface is a regular numeric keyboard, the numeric keyboard has ten numerals 0-9, each numeral corresponds to one button, the user may draw any graphic on the numeric keyboard, and numerals corresponding to buttons which a touch track of the user when drawing a graphic sequentially passes through are used for encoding. Therefore, for this embodiment, the code corresponding to the second touch track is 1478. When the input interface is a virtual keyboard of a PC, encoding may be performed according to letters corresponding to buttons which the touch track passes through.

Step 303: Establish a mapping relationship between the code corresponding to the second touch track and the word to be added, and store the mapping relationship into a pre-established vocabulary.

Specifically, the code 1478 corresponding to the second touch track is generated in step 302; a mapping relationship between the code 1478 and the word to be added that is input in step 201 is established, where the word to be added is the QQ account 12345678, that is, the code 1478 uniquely identifies the word 12345678; and the mapping relationship is stored into the vocabulary. In this embodiment, one touch track of the user corresponds to unique code. However, it should be noted that, one code may also correspond to a plurality of words, for example, the code 1478 may also correspond to other words. For example, when a user has a plurality of QQ accounts, the code 1478 may correspond to the plurality of QQ accounts, as long as a mapping relationship between the code 1478 and the words is added.

In addition, for example, the vocabulary may also store a mapping relationship between code and words in the following form, as shown in Table 1:

**Table 1**

| Word | Touch Track Information | Code |
|---|---|---|
| 12345678 (Remarks: QQ account) | L | 1478 |
| Good Night | \ | 15 |
| Jacky.chen@163.com (Remarks: 163 mail) | / | 456 |

Step 304: According to a gesture input mode selected by the user, acquire a first touch track matching the gesture input mode.

Step 305: Encodes the first touch track according to a preset encoding rule to obtain code corresponding to the first touch track.

In this step, the set encoding rule is the same as the encoding rule used for encoding the second touch track in step 302, and is specifically: combining characters corresponding to buttons which the first touch track sequentially passes through on the virtual keyboard, to obtain the code corresponding to the first touch track.

Step 306: Query the pre-established vocabulary to acquire a candidate word corresponding to the code.

In this step, since the pre-established vocabulary already stores the mapping relationship between code and words, the candidate word corresponding to the code can be acquired by looking up the vocabulary according to the obtained code.

In this embodiment, when the user needs to input a QQ account of the user, the user may switch the input interface on the terminal device to the gesture input mode. In the gesture input mode, the user draws a graphic with a single stroke on the input interface, to trigger the terminal device to acquire touch track information according to the gesture input mode and recognize the touch track information to obtain corresponding code. For example, it is recognized that an area which the touch track of the user passes through is 1478, and accordingly, the code is 1478. In this case, the local vocabulary is queried to acquire the candidate word, that is, the QQ account 12345678, corresponding to the code 1478.

In addition, it should also be noted that, if there is one candidate word, the candidate word (that is, the QQ account 12345678) is the word to be input by the user; and if there is a plurality of candidate words, the plurality of candidate words is sorted according to a descending order of frequency of the plurality of candidate words, andterminal device the sorted plurality of candidate words is displayed on a screen of the terminal device, so that the user selects one candidate word from them as the word to be input by the user; and finally, the terminal device displaysterminal deviceterminal device the word selected by the user from the sorted plurality of candidate words in a particular area on the screen of the terminal device. Here, the particular area is an input area specified by an application program currently being used by the user or an application program waiting for text input.

In the input processing method provided in this embodiment, a touch track of a simple graphic drawn by a user, code corresponding to the touch track, and a mapping relationship between the code and a word are stored in advance in a local vocabulary, so that a mapping relationship between complex words and simple graphics is established, where the words are some complex words commonly used by the user, for example, a QQ account, an email address, a password and the like of the user. In use, the user only needs to switch the input mode to the gesture input mode, and draw a graphic with a single stroke on the input interface, and a device recognizes touch track information of the graphic, obtains code corresponding to the touch track information, looks up the vocabulary for a corresponding candidate word according to a mapping relationship between the code and the word, and uses the candidate word as a word to be input by the user. In this way, the user can complete input of a long and complex word by using a single input, thereby improving the input efficiency and accuracy.

The input processing method provided in this embodiment is applicable to input of complex words. Compared with conventional handwriting input, in the input processing method provided in this embodiment, recognition of a drawn graphic and a text is not performed, but instead, a touch track of a drawn graphic is encoded and a mapping relationship between the code and a word is established. For example, when an L-shaped graphic is drawn, it is unnecessary to recognize whether the graphic is the letter L, but instead, corresponding code is obtained according to a touch track of the graphic and a corresponding word is found according to the code. In this way, not only the input efficiency is improved, but also the input accuracy is improved.

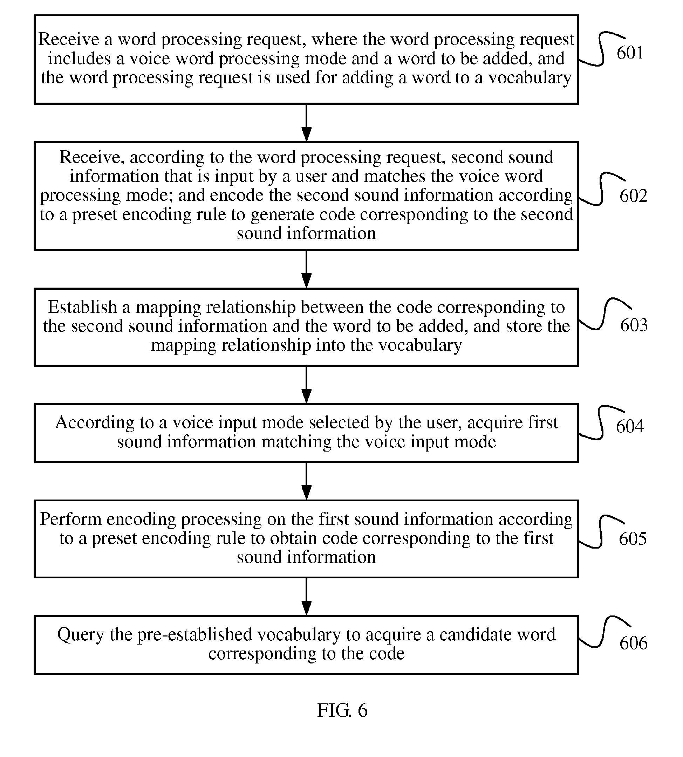

FIG. 6 is a flowchart of yet another embodiment of an input processing method of the present invention. In this embodiment, the technical solution of this embodiment is introduced in detail by using an example where the method is performed by a terminal device such as a mobile phone, an input mode is a voice input processing mode, and first input information is sound information input by a user. As shown in FIG. 6, the method includes:

Step 601: Receive a word processing request, where the word processing request includes a voice word processing mode and a word to be added, and the word processing request is used for adding a word to a vocabulary.

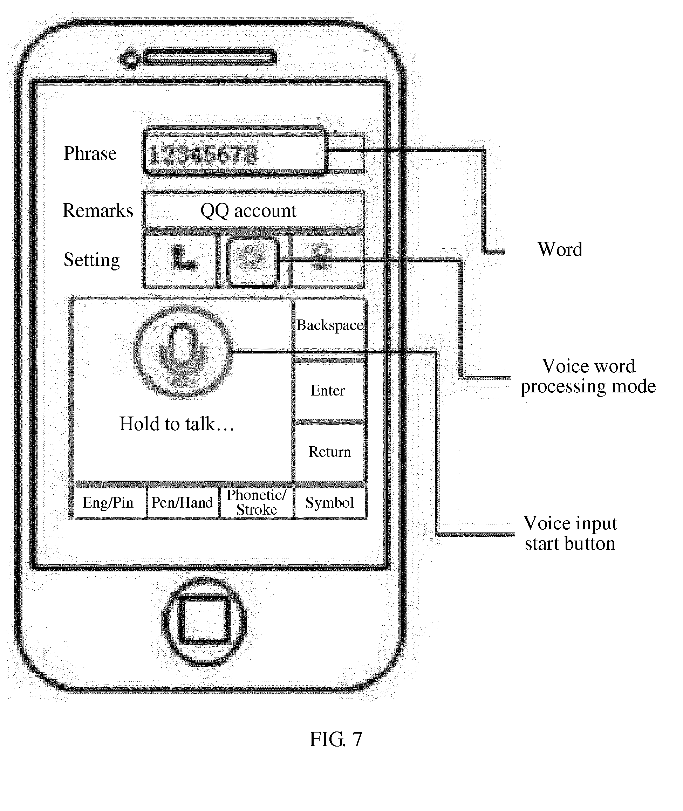

In this embodiment, the word processing request is input by the user by using an input interface of the terminal device. FIG. 7 is still another schematic diagram of an input interface of a terminal device. First, the user opens a page for adding a user-defined word on the input interface, and corresponding buttons are set on the page, which respectively represent different word processing modes. As shown in FIG. 4, there are a gesture word processing mode and the voice word processing mode. When the user selects the voice word processing mode, the page shown in FIG. 7 appears, and in the voice word processing mode, the user inputs a word to be added, and sets remark information for the word, with remarks being 163 mail.

Step 602: Receive, according to the word processing request, second sound information that is input by the user and matches the voice word processing mode; and encodes the second sound information according to a preset encoding rule to generate code corresponding to the second sound information.

In this embodiment, according to the word processing request, the second sound information that is input by the user and matches the voice word processing mode is received, where the second sound information is collected by the terminal device by using a sound sensor of the terminal device. After the second sound information is received, encoding processing is performed on the second sound information according to the preset encoding rule to generate the code corresponding to the second sound information. Specifically, encoding processing may be performed on the second sound information by using a hash algorithm, a hidden Markov model HMM algorithm or a dynamic time warping DTW algorithm to obtain the code corresponding to the second input information.

Description is given below by using a specific example. As shown in FIG. 7, in the voice word processing mode, a voice input start button (also serving as a voice input end button) may be set on the input interface of the terminal device. A microphone or another voice input apparatus on the terminal device is turned on by pressing and holding the voice input start button; the user emits a sound, for example, the user emits sound information of an email address; the terminal device starts to collect sound information of the user; the user releases the voice input start button. In this way, one process of sound information collection is completed, and the collected sound information is the second sound information.

After the second sound information is collected, the second sound information is encoded to generate the code corresponding to the sound information. Here, the encoding rule is preset, and the encoding rule may be converting the collected sound information into a character string or a text by using a voice recognition algorithm commonly used in the prior art, for example, a hash algorithm, a hidden Markov model HMM algorithm or a dynamic time warping DTW algorithm. The encoding rule is not particularly limited in the embodiment of the present invention. By encoding the second sound information input by the user, the code corresponding to the second sound information is obtained. In this embodiment, for example, the code corresponding to the second sound information is Sjdegsogea4512.

Step 603: Establish a mapping relationship between the code corresponding to the second sound information and the word to be added, and store the mapping relationship into the vocabulary.

Specifically, the code Sjdegsogea4512 corresponding to the second sound information is generated in step 602; a mapping relationship between the code Sjdegsogea4512 and the word to be added Jacky.Chen@163.com that is input in step 601 is established, where the code Sjdegsogea4512 uniquely identifies the word Jacky.Chen@163.com; and the mapping relationship is stored into the vocabulary. In this embodiment, one piece of sound information of the user corresponds to unique code. It should be noted that, one code may correspond to a plurality of words. For example, a user has a plurality of email addresses, and for ease of memorization, the user establishes a mapping relationship between code corresponding to sound information of email and the plurality of email addresses, as long as a mapping relationship between the code and corresponding words is added in the local vocabulary.

For example, the local vocabulary may also store a mapping relationship between code and words in the following form, as shown in Table 2:

**Table 2**

| Word | Sound Information | Code |
|---|---|---|
| Jacky.Chen@163.com (Remarks: 163 mail) | Audio 1 | Sjdegsogea4512 |
| ********* (Email password) | Audio 2 | 46ddengucka51 |
| 18632590411 (XX mobile phone number) | Audio 3 | Dsh8e0-weg09-o4 |

Here, audio 1, audio 2 and audio 3 record sound information input by the user.

Step 604: According to a voice input mode selected by the user, acquire first sound information matching the voice input mode.

In the voice input mode, the first sound information is collected by the terminal device by using the sensor.

Step 605: Encodes the first sound information according to a preset encoding rule to obtain code corresponding to the first sound information.

The encoding rule used in this step is the same as the encoding rule used in step 602, and may specifically be: encoding the first sound information by using a hash algorithm, a hidden Markov model HMM algorithm or a dynamic time warping DTW algorithm to obtain the code corresponding to the first input information.

Step 606: Query a pre-established vocabulary to acquire a candidate word corresponding to the code.

In this step, since the pre-established vocabulary already stores the mapping relationship between code and words, the candidate word corresponding to the code can be acquired by looking up the vocabulary according to the obtained code.

In this embodiment, when the user needs to input an email address of the user, the user first switches the input interface of the terminal device to the voice input mode. In the voice input mode, the user emit sound information by pressing and holding the voice input start button on the input interface, to trigger the terminal device to acquire the sound information according to the voice input mode and recognize the sound information to obtain code corresponding to the sound information. For example, it is recognized that the code corresponding to the sound information input by the user is Sjdegsogea4512. In this case, the local vocabulary is queried to acquire the candidate word, that is, Jacky.Chen@ 163.com, corresponding to the code Sjdegsogea4512.

In addition, it should also be noted that, if there is one candidate word, the candidate word (that is, Jacky.Chen@ 163.com) is the word to be input by the user; and if there is a plurality of candidate words, the plurality of candidate words is sorted according to a descending order of frequency of the plurality of candidate words, and the sorted plurality of candidate words is displayed to the user, so that the user selects one candidate word from them as the word to be input by the user; and the user selects the word to be input from the sorted plurality of candidate words corresponding to the code and inputs the word.

In the input processing method provided in this embodiment, brief sound information of a user, code corresponding to the sound information, and a mapping relationship between the code and a word are stored in advance in a local vocabulary, so that a mapping relationship between complex words and sound information is established, where the words are some complex words commonly used by the user, for example, an email address, a password, a mobile phone number and the like of the user. In use, the user only needs to switch the input mode to the voice input mode, and perform a corresponding operation to input sound information of the user, and a device recognizes the sound information, obtains code corresponding to the sound information, and looks up the local vocabulary for a corresponding candidate word according to the mapping relationship between the code and the word. In this way, input of a long and complex word can be implemented by inputting brief sound information, thereby improving the input efficiency.

The input processing method provided in this embodiment is applicable to an operation scenario that is vibrating and is not easy for handwriting, for example, when a user needs to input during driving. By switching the input mode to the voice input mode, the user can complete input of a complex word by simply inputting brief sound information, which is convenient and improves the input efficiency. Different from conventional voice input, in the input processing method provided in this embodiment, recognition of a sound and a text is not performed, but instead, an input sound is simply mapped to a word, which improves the input accuracy. For example, when the sound information input by the user is "My Email", a program does not recognize the sound information and text "My Email", and does not need to return the text "My Email" to the user, but instead, an email address of the user is returned according to a mapping relationship between code corresponding to a sound signal and a word.

In addition, it should also be noted that in the present invention, a character input mode may also be used to acquire a word to be input by the user. Specifically, the user may switch the input interface to the character input mode, and in this mode, the terminal device acquires character information input by the user, indexes and retrieves a candidate word corresponding to the character information from the local vocabulary, sorts a plurality of found candidate words corresponding to the character information according to a descending order of frequency, and displays the sorted plurality of candidate words to the user by using an interface of the terminal device. The user selects the word to be input from the returned plurality of candidate words. After the terminal device acquires the word to be input that is selected by the user, secondary indexing may be further performed in the local vocabulary according to a context of the word to predict a word that the user may subsequently input. After the secondary indexing, the user may directly select the word to be input from candidate words obtained after the secondary indexing, without further inputting any character.

For example, the user inputs "ao" using Pinyin, and a plurality of corresponding candidate words (words), such as 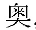 , 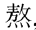 , 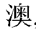 , and 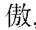 , is found in the local vocabulary according to "ao". The candidate words may be output after being sorted according to a descending order of frequency. When the user selects the candidate word " 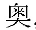 " as the word to be input by the user, secondary indexing may be further performed in the local vocabulary according to " 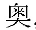 ", to acquire, from the local vocabulary, a plurality of candidate words associated with " 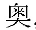 ", such as 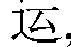 , 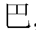 , 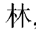 , and 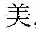 , for selection by the user. When the second word selected by the user is " 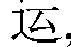 ", the context is 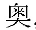 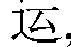 , and in this case, a plurality of associated candidate words such as 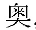 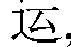 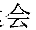 and 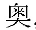 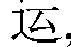 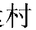 may be further obtained according to " 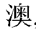 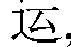 ". Finally, " 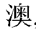 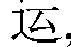 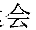 " selected by the user is acquired as the word to be input by the user.

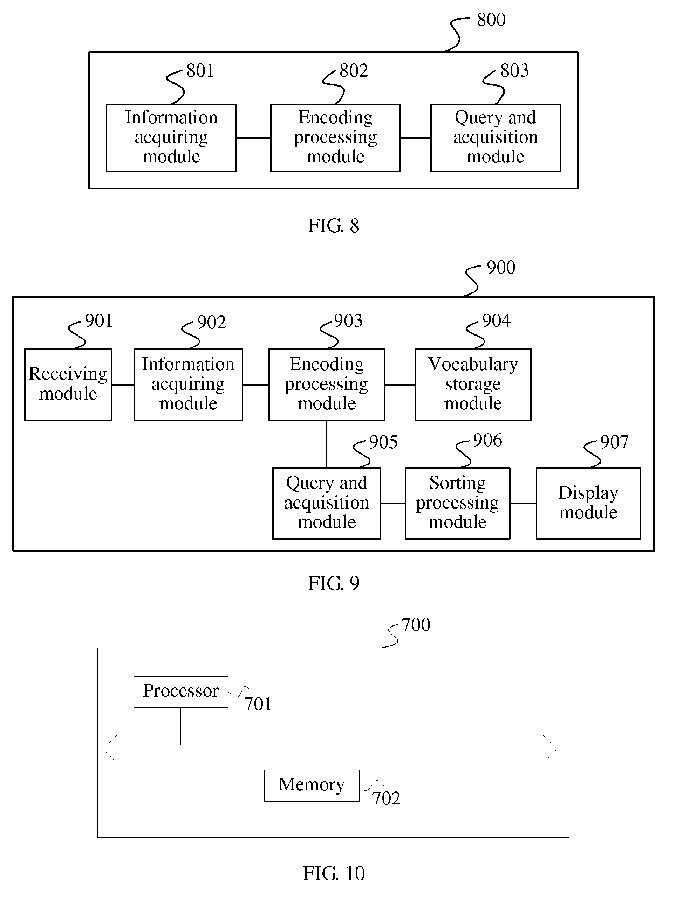

FIG. 8 is a schematic structural diagram of an embodiment of an input processing apparatus of the present invention. As shown in FIG. 8, the input processing apparatus 800 provided in this embodiment includes an information acquiring module 801, an encoding processing module 802 and a query and acquisition module 803. The information acquiring module 801 is configured to acquire, according to an input mode selected by a user, first input information that is input by the user and matches the input mode, where the input mode is a gesture input mode or a voice input mode. The encoding processing module 802 is configured to encodes the first input information according to a preset encoding rule to obtain code corresponding to the first input information. The query and acquisition module 803 is configured to query a pre-established vocabulary to acquire a candidate word corresponding to the code.

The input processing apparatus 800 of this embodiment may execute the technical solution of the method embodiment in FIG. 1, and the implementation principles are similar to those of the method embodiment, so the details are not be described herein again.

In this embodiment, according to an input mode selected by a user, first input information that matches the input mode is acquired; encoding processing is performed on the first input information according to a preset encoding rule to obtain code corresponding to the first input information; and finally a pre-established vocabulary is queried to acquire a candidate word corresponding to the code. By acquiring first input information according to different input modes, acquiring corresponding code according to the first input information, and then acquiring, by encoding, a word to be input by the user, rapid and accurate input of complex words is implemented, thereby effectively improving the input efficiency.

Further, in another embodiment of the present invention, based on the above embodiment shown in FIG. 8, the input processing apparatus further includes a touchscreen and a sound sensor, and a virtual keyboard is displayed on the touchscreen for the user to perform a touch operation. The sound sensor is configured to collect a sound. Correspondingly, the information acquiring module 801 is specifically configured to: when the input mode is the gesture input mode, acquire a first touch track of the user on the virtual keyboard of the input processing apparatus; and the encoding processing module 802 is specifically configured to: when the first input information acquired by the information acquiring module 801 is the first touch track of the user on the virtual keyboard of the input processing apparatus, combine characters corresponding to buttons which the first touch track sequentially passes through on the virtual keyboard according to the preset encoding rule, to obtain the code corresponding to the first input information.

The information acquiring module 801 is specifically further configured to: when the input mode is the voice input mode, collect first sound information by using the sound sensor of the input processing apparatus. The encoding processing module 802 is specifically configured to: when the first input information acquired by the information acquiring module 802 is the first sound information, encodes the first sound information according to the preset encoding rule, for example, by using a hash algorithm, a hidden Markov model HMM algorithm or a dynamic time warping DTW algorithm to obtain the code corresponding to the first input information.

After querying a pre-established vocabulary to acquire a candidate word corresponding to the code, the query and acquisition module 803 is configured to is further configured to: when a plurality of candidate words corresponding to the code is acquired, sort the plurality of candidate words according to a descending order of frequency, and display the sorted plurality of candidate words to the user; and receive a word corresponding to the code and input by the user, where the word corresponding to the code is a word selected by the user from the sorted plurality of candidate words.

FIG. 9 is a schematic structural diagram of another embodiment of an input processing apparatus of the present invention. As shown in FIG. 9, the input processing apparatus 900 provided in this embodiment includes: a receiving module 901, an information acquiring module 902, an encoding processing module 903, a word storage module 904, a query and acquisition module 905, a sorting processing module 906 and a display module 907. The receiving module 901 is configured to receive a word processing request, where the word processing request is used for requesting addition of a word to the vocabulary, the word processing request includes a word processing mode and a word to be added, and the word processing mode is a gesture word processing mode or a voice word processing mode. The information acquiring module 902 is configured to receive, according to the word processing request, second input information that is input by a user and matches the word processing mode. The encoding processing module 903 is configured to encodes the second input information according to a preset encoding rule to generate code corresponding to the second input information. The word storage module 904 is configured to establish a mapping relationship between the code corresponding to the second input information and the word to be added, and store the mapping relationship into the vocabulary. The information acquiring module 902 is further configured to acquire, according to an input mode selected by the user, first input information that is input by the user and matches the input mode, where the input mode is a gesture input mode or a voice input mode. The encoding processing module 903 is further configured to encodes the first input information according to the preset encoding rule to obtain code corresponding to the first input information. The query and acquisition module 905 is configured to query a pre-established vocabulary to acquire a candidate word corresponding to the code.

In this embodiment, the word processing request received by the receiving module 901 is input by the user by using an input interface of the terminal device, the word processing request is used for requesting addition of a word to the vocabulary, the word processing request includes a word processing mode and a word to be added, and the word processing mode is a voice word processing mode or a gesture word processing mode. The word to be added is a word that does not exist in the vocabulary, and the word may be may be a single word, a phrase, a sentence, or a long string of characters such as numerals and letters, for example, a QQ account 8945145182, or an email address yagneos235@hotmail.com.cn.

The information acquiring module 902 is configured to receive, according to the word processing request, second input information that is input by a user and matches the word processing mode. The information acquiring module 902 is specifically configured to: when the word processing mode is the gesture word processing mode, acquire a second touch track of the user on a virtual keyboard of the input processing apparatus; and when the word processing mode is the voice word processing mode, collect second sound information by using a sound sensor of the input processing apparatus.

The encoding processing module 903 is configured to encode the second input information according to a preset encoding rule to generate code corresponding to the second input information. In this embodiment, for different second input information, different encoding manners are adopted, and the encoding rule is predefined. The encoding processing module 903 is specifically configured to: when the second input information acquired by the information acquiring module 902 is the second touch track of the user on the virtual keyboard of the input processing apparatus, combine characters corresponding to buttons which the second touch track sequentially passes through on the virtual keyboard to obtain the code corresponding to the second input information; and when the second input information acquired by the information acquiring module 902 is the second sound information, encodes the second sound information by using a hash algorithm, a hidden Markov model HMM algorithm or a dynamic time warping DTW algorithm to obtain the code corresponding to the second input information. The code corresponding to the second input information uniquely identifies the second input information.

The word storage module 904 is configured to establish a mapping relationship between the code corresponding to the second input information and the word to be added, and store the mapping relationship into the vocabulary. In this embodiment, the word storage module 904 establishes a mapping relationship between the code corresponding to the second input information generated by the encoding processing module 903 and the word to be added and received by the receiving module 901, and store the mapping relationship into the preset vocabulary. In this way, a mapping relationship between the input information of the user and the word is established, and the mapping relationship is stored into the local vocabulary. When the user inputs the input information again, the input information of the user can be recognized, and the code corresponding to the input information can be acquired.

In this embodiment, the information acquiring module 902 is further configured to acquire, according to an input mode selected by the user, first input information that is input by the user and matches the input mode, where the input mode is a gesture input mode or a voice input mode. The information acquiring module 902 is specifically configured to: when the input mode is the gesture input mode, acquire a first touch track of the user on the virtual keyboard of the input processing apparatus; or when the input mode is the voice input mode, collect first sound information by using the sound sensor of the input processing apparatus.

After the information acquiring module 902 acquires the first input information input by the user, the encoding processing module 903 encodes the first input information according to the preset encoding rule to obtain code corresponding to the first input information. The encoding processing module 903 is specifically configured to: when the acquired first input information is the first touch track on the virtual keyboard of the input processing apparatus, combine characters corresponding to buttons which the first touch track sequentially passes through on the virtual keyboard, to obtain the code corresponding to the first input information. The characters may be numerals or letters, that is, the code may be obtained by combining the numerals corresponding to the buttons which the first touch track sequentially passes through, or the code may be obtained by combining the letters corresponding to the buttons which the first touch track sequentially passes through.

The encoding processing module 903 is further configured to: when the acquired first input information is the first sound information, encodes the first sound information by using the hash algorithm, the hidden Markov model HMM algorithm or the dynamic time warping DTW algorithm to obtain the code corresponding to the first input information.

The query and acquisition module 905 queries a pre-established vocabulary to acquire a candidate word corresponding to the code.

Specifically, the query and acquisition module 905 looks up the pre-established vocabulary according to the code corresponding to the first input information and obtained by the encoding processing module 903, where the vocabulary stores a mapping relationship between the code and a corresponding word, and acquires a candidate word corresponding to the code according to the mapping relationship between the code and the word. In addition, it should also be noted that, if the query and acquisition module 905 acquires one candidate word, the candidate word is the word to be input by the user; and if the query and acquisition module 905 acquires a plurality of candidate words, the sorting processing module 906 sorts the plurality of candidate words according to a descending order of frequency, and displays, on a screen of the input processing apparatus, the sorted plurality of candidate words for selection by the user. The display module 907 is configured to display, in a particular area on the screen of the input processing apparatus, a word selected by the user from the sorted plurality of candidate words.

The input processing apparatus provided in this embodiment may be configured to execute the technical solution of any method embodiment of the present invention, and the implementation principles are similar to those of the method embodiment, so the details are not be described herein again.

FIG. 10 is a schematic structural diagram of still another embodiment of an input processing apparatus of the present invention. As shown in FIG. 10, the input processing apparatus 700 of this embodiment includes: at least one processor 701, a memory 702 and a bus. The processor 701 and the memory 702 are connected to and implement communication with each other by using the bus. The bus may be an industry standard architecture (Industry Standard Architecture, ISA for short) bus, a peripheral component interconnect (Peripheral Component, PCI for short) bus or an extended industry standard architecture (Extended Industry Standard Architecture, EISA for short) bus and so on. The bus may be divided into an address bus, a data bus, a control bus and so on. For ease of illustration, the bus is only denoted by a solid line in FIG. 10, but it does not indicate that only one bus or one type of bus exists.

The memory 702 is configured to store executable program code. The program code includes computer operation instructions. The memory 702 may include a high-rate random access memory RAM (Random Access Memory), and may also include a non-volatile memory (non-volatile memory), for example, at least one disk memory.

In an embodiment, the processor 701 runs a program corresponding to the executable program code by reading the executable program code stored in the memory 702, so as to:
acquire, according to an input mode selected by a user, first input information that is input by the user and matches the input mode, where the input mode is a gesture input mode or a voice input mode;
encodes the first input information according to a preset encoding rule to obtain code corresponding to the first input information; and
query a pre-established vocabulary to acquire a candidate word corresponding to the code.

Specifically, in an embodiment, the input processing apparatus further includes a touchscreen and a sound sensor, and a virtual keyboard is displayed on the touchscreen for the user to perform a touch operation. The sound sensor is configured to collect a sound. Correspondingly, the encoding the first input information according to a preset encoding rule to obtain code corresponding to the first input information specifically includes: when the acquired first input information is a first touch track of the user on the virtual keyboard of the terminal device, combining characters corresponding to buttons which the first touch track sequentially passes through on the virtual keyboard, to obtain the code corresponding to the first input information; and when the acquired first input information is the first sound information, encoding the first sound information by using a hash algorithm, a hidden Markov model HMM algorithm or a dynamic time warping DTW algorithm to obtain the code corresponding to the first input information.

Further, in an embodiment, the processor 701 runs the program corresponding to the executable program code by reading the executable program code stored in the memory 702, further so as to:
receive a word processing request, where the word processing request is used for requesting addition of a word to the vocabulary, the word processing request includes a word processing mode and a word to be added, and the word processing mode is a gesture word processing mode or a voice word processing mode;
receive, according to the word processing request, second input information that is input by the user and matches the word processing mode; and encode the second input information according to the preset encoding rule to generate code corresponding to the second input information; and
establish a mapping relationship between the code corresponding to the second input information and the word to be added, and store the mapping relationship into the vocabulary.

Persons of ordinary skill in the art may understand that, all or a part of the steps of the foregoing method embodiments may be implemented by a program instructing relevant hardware. The foregoing program may be stored in a computer readable storage medium. When the program runs, the steps of the foregoing method embodiments are performed. The foregoing storage mediums include various mediums capable of storing program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, without departing from the spirit and scope of the technical solutions of the embodiments of the present invention.

## Claims

1. An input processing method, comprising:
acquiring, by a terminal device according to an input mode selected by a user, first input information that is input by the user and matches the input mode, wherein the input mode is a gesture input mode or a voice input mode;
encoding, by the terminal device, the first input information according to a preset encoding rule to obtain code corresponding to the first input information; and
querying, by the terminal device, a pre-established vocabulary to acquire a candidate word corresponding to the code.

2. The input processing method according to claim 1, wherein the acquiring first input information that is input by the user and matches the input mode comprises:
when the input mode is the gesture input mode, acquiring a first touch track of the user on a virtual keyboard of the terminal device; or when the input mode is the voice input mode, collecting first sound information by using a sound sensor of the terminal device.

3. The input processing method according to claim 2, wherein the encoding the first input information according to a preset encoding rule to obtain code corresponding to the first input information comprises:
when the acquired first input information is the first touch track of the user on the virtual keyboard of the terminal device, combining characters corresponding to buttons which the first touch track sequentially passes through on the virtual keyboard, to obtain the code corresponding to the first input information; and
when the acquired first input information is the first sound information, encoding the first sound information by using a hash algorithm, a hidden Markov model HMM algorithm or a dynamic time warping DTW algorithm to obtain the code corresponding to the first input information.

4. The input processing method according to any one of claims 1 to 3, further comprising:
receiving, by the terminal device, a word processing request, wherein the word processing request is used for requesting addition of a word to the vocabulary, the word processing request comprises a word processing mode and a word to be added, and the word processing mode is a gesture word processing mode or a voice word processing mode;
receiving, by the terminal device according to the word processing request, second input information that is input by the user and matches the word processing mode; and encoding the second input information according to the preset encoding rule to generate code corresponding to the second input information; and
establishing, by the terminal device, a mapping relationship between the code corresponding to the second input information and the word to be added, and storing the mapping relationship into the vocabulary.

5. The input processing method according to claim 4, wherein the receiving second input information that is input by the user and matches the word processing mode comprises:
when the word processing mode is the gesture word processing mode, acquiring a second touch track of the user on the virtual keyboard of the terminal device; or
when the word processing mode is the voice word processing mode, collecting second sound information by using the sound sensor of the terminal device.

6. The input processing method according to claim 5, wherein the encoding the second input information according to the preset encoding rule to generate code corresponding to the second input information comprises:
when the acquired second input information is the second touch track of the user on the virtual keyboard of the terminal device, combining characters corresponding to buttons which the second touch track sequentially passes through on the virtual keyboard, to obtain the code corresponding to the second input information; and
when the acquired second input information is the second sound information, encoding the second sound information by using the hash algorithm, the hidden Markov model HMM algorithm or the dynamic time warping DTW algorithm to obtain the code corresponding to the second input information.

7. The input processing method according to any one of claims 1 to 6, wherein after the querying a pre-established vocabulary to acquire a candidate word corresponding to the code, the method further comprises:
when a plurality of candidate words corresponding to the code is acquired, arranging the plurality of candidate words according to a descending order of frequency, and displaying, on a screen of the terminal device, the sorted plurality of candidate words for selection by the user; and
displaying, in a particular area on the screen of the terminal device, a word selected by the user from the sorted plurality of candidate words.

8. An input processing apparatus, comprising:
an information acquiring module, configured to acquire, according to an input mode selected by a user, first input information that is input by the user and matches the input mode, wherein the input mode is a gesture input mode or a voice input mode;
an encoding processing module, configured to encodes the first input information according to a preset encoding rule to obtain code corresponding to the first input information; and
a query and acquisition module, configured to query a pre-established vocabulary to acquire a candidate word corresponding to the code.

9. The input processing apparatus according to claim 8, wherein the information acquiring module is specifically configured to: when the input mode is the gesture input mode, acquire a first touch track of the user on a virtual keyboard of the input processing apparatus; or
the information acquiring module is specifically configured to: when the input mode is the voice input mode, collect first sound information by using a sound sensor of the input processing apparatus.

10. The input processing apparatus according to claim 9, wherein
the encoding processing module is specifically configured to: when the first input information acquired by the information acquiring module is the first touch track on the virtual keyboard of the input processing apparatus, combine characters corresponding to buttons which the first touch track sequentially passes through on the virtual keyboard, to obtain the code corresponding to the first input information; or the encoding processing module is specifically configured to: when the first input information acquired by the information acquiring module is the first sound information, encodes the first sound information by using a hash algorithm, a hidden Markov model HMM algorithm or a dynamic time warping DTW algorithm to obtain the code corresponding to the first input information.

11. The input processing apparatus according to claim 9, wherein the input processing apparatus further comprises: a receiving module and a word storage module, wherein
the receiving module is configured to receive a word processing request, wherein the word processing request is used for requesting addition of a word to the vocabulary, the word processing request comprises a word processing mode and a word to be added, and the word processing mode is a gesture word processing mode or a voice word processing mode;
the information acquiring module is further configured to receive, according to the word processing request, second input information that is input by the user and matches the word processing mode;
the encoding processing module is further configured to encodes the second input information according to the preset encoding rule to generate code corresponding to the second input information; and
the word storage module is configured to establish a mapping relationship between the code corresponding to the second input information and the word to be added, and store the mapping relationship into the vocabulary.

12. The input processing apparatus according to claim 11, wherein the information acquiring module is specifically configured to: when the word processing mode is the gesture word processing mode, acquire a second touch track of the user on the virtual keyboard of the input processing apparatus; or
the information acquiring module is specifically configured to: when the word processing mode is the voice word processing mode, collect second sound information by using the sound sensor of the input processing apparatus.

13. The input processing apparatus according to claim 12, wherein the encoding processing module is specifically configured to: when the second input information acquired by the information acquiring module is the second touch track of the user on the virtual keyboard of the input processing apparatus, combine characters corresponding to buttons which the second touch track sequentially passes through on the virtual keyboard to obtain the code corresponding to the second input information; or
the encoding processing module is specifically configured to: when the second input information acquired by the information acquiring module is the second sound information, encodes the second sound information by using the hash algorithm, the hidden Markov model HMM algorithm or the dynamic time warping DTW algorithm to obtain the code corresponding to the second input information.

14. The input processing apparatus according to any one of claims 8 to 13, further comprising:
a sorting processing module, configured to: when a plurality of candidate words corresponding to the code is acquired, sort the plurality of candidate words according to a descending order of frequency, and display, on a screen of the input processing apparatus, the sorted plurality of candidate words for selection by the user; and
a display module, configured to display, in a particular area on the screen of the input processing apparatus, a word selected by the user from the sorted plurality of candidate words.
